# EUROPEAN PATENT SPECIFICATION

(11) **EP 0 404 744 B1**
(45) Date of publication and mention of the grant of the patent: **31.08.1994**
(21) Application number: 90850233.9
(22) Date of filing: 12.06.1990
(51) Int. Cl.: B23C 5/20

(54) **Cutting insert for chip forming machining**
Schneideinsatz für spanabnehmende Maschinen
Plaquette de coupe pour machine à enlèvement de copeaux

(30) Priority: 22.06.1989 SE 8902282
(43) Date of publication of application: 27.12.1990
(73) Proprietor: SECO TOOLS AB, S-773 01 Fagersta (SE)
(72) Inventor: Loqvist, Kaj-Ragnar, S-773 00 Fagersta (SE); Strand, Bengt, S-773 00 Fagersta (SE)
(74) Representative: Eriksson, Kjell

(56) References cited:
- EP-A- 0 046 511
- EP-A- 0 073 926
- FR-A- 2 268 589
- GB-A- 592 954
- US-A- 4 710 069
- PATENT ABSTRACTS OF JAPAN, vol. 8, no. 83 (M-290)[1520], 17th April 1984;& JP-A-59 1105 (USHIJIMA) 06-01-1984

## Description

The present invention relates to a cutting insert for chip forming machining, said cutting insert including at least one cutting edge created by the transition between an upper face and an edge face of the cutting insert, said upper face being a rake face and said edge face being a clearence face, said rake face including a chip upsetting face adjacent to the cutting edge and a concavely curved chip forming face extending inwardly from the chip upsetting face and forming a border line separating the chip upsetting face and the chip forming face, a number of mutually separated along and inside of the cutting edge located depressions being arranged to bridge the border line between the chip upsetting face and the chip forming face. The cutting insert according to the present invention is primarily intended to be used for milling.

A cutting insert of the type described above is known from US-A-4,710.069. This document is incorporated in the specification of this application by way of reference. In said cutting insert the depressions have a longitudinal extension in a direction perpendicular to the cutting edge of the cutting insert. Since the so called chip flow angle usually has a value of about 5 - 15° the chip will have a lateral displacement relative to the depressions, said lateral displacement causing an increased friction between the chip and the cutting insert. The friction work generates heat and consequently an unwanted heating of the cutting insert takes place. Said heating will eventually damage the cutting insert.

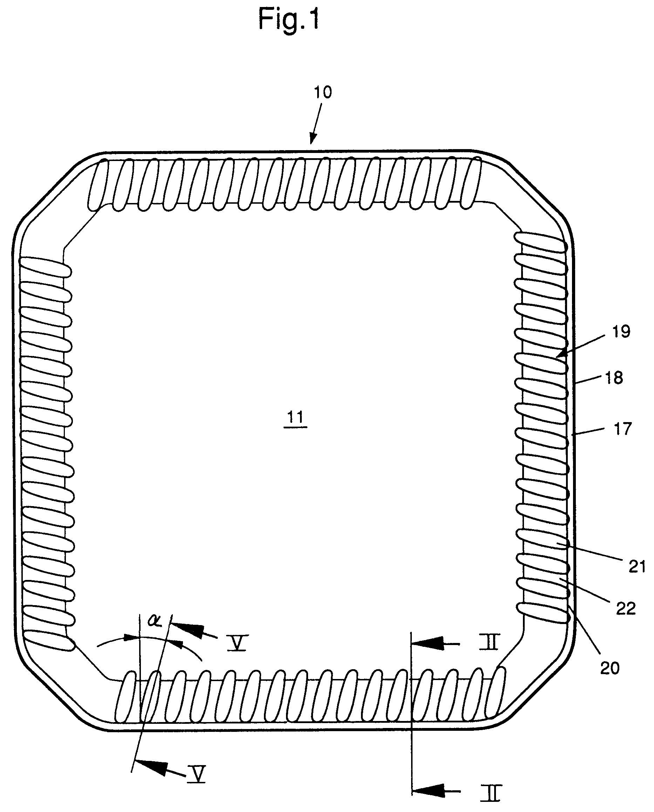

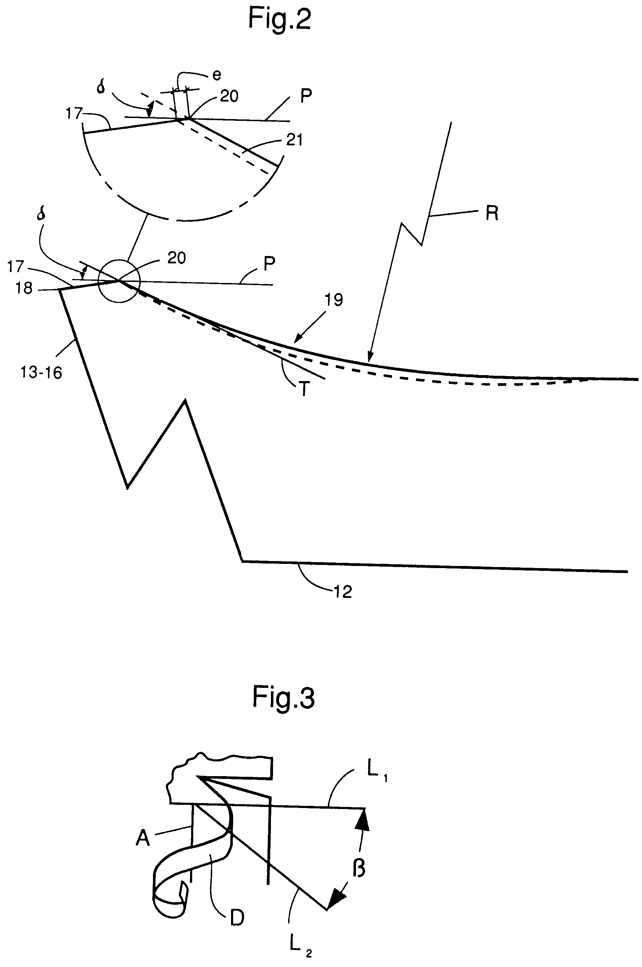

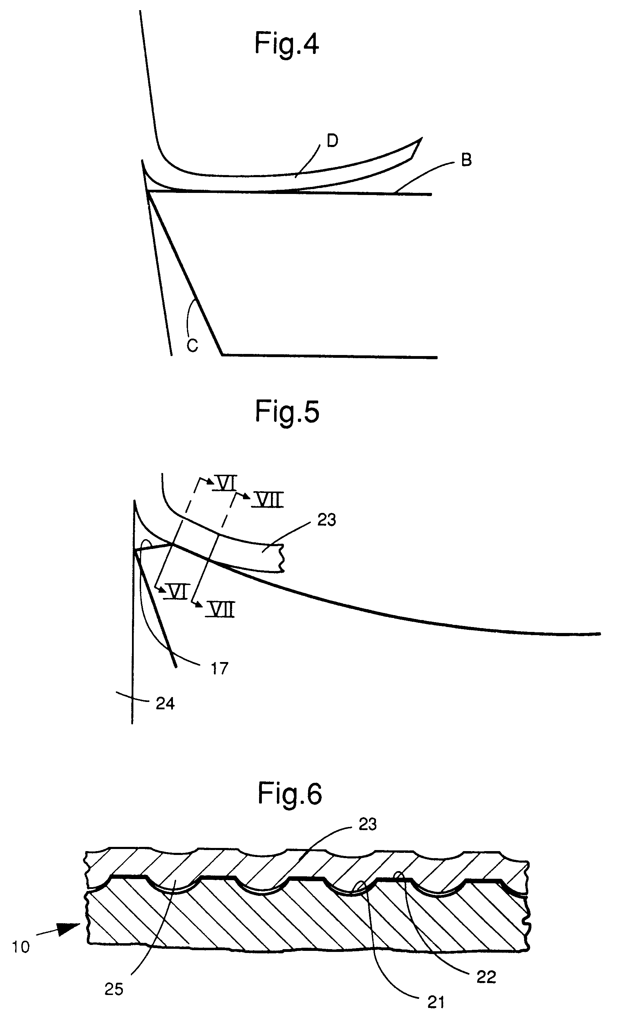

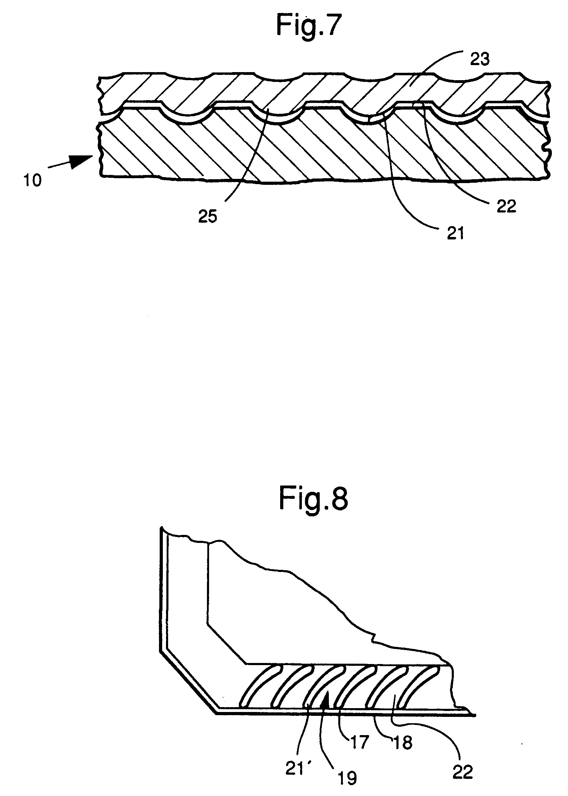

The aim of the present invention is to present a cutting insert being designed to avoid the negative effects described above by having the chip to flow in a way causing a small contact area and consequently a low friction between the chip and the cutting insert. The present invention is realized by a cutting insert that has been given the characteristics of the appending claims.
Below a preferred embodiment of a cutting insert according to the invention will be described, reference being made to the accompanying drawings, where the Fig.1 discloses a top view of a cutting insert according to the invention; Fig.2 discloses a section along the line II-II in Fig.1, said Figure also including a deatail in an enlarged scale of an encircled portion of Fig.2; Fig.3 discloses the definition of the chip flowing angle; Fig.4 schematically discloses the chip forming of a conventional cutting insert; Fig.5 schematically discloses the chip forming of a cutting insert according to the invention; Fig.6 discloses a section along the line VI-VI in Fig.5; Fig.7 discloses a section along the line VII-VII in Fig.5; and Fig.8 discloses in top view a portion of a cutting insert according to an alternative embodiment.

The cutting insert 10 disclosed in Fig.1 has a square basic shape and includes a mainly planar upper face 11, a mainly planar lower face 12 and edge faces 13-16 connecting the upper and lower faces 11, 12 resp.. The cutting insert 10 has a positive geometry, i.e. each edge face forms an acute angle with the upper face 11. However, within the scope of the invention it is possible that the insert has a negative geometry, i.e. the edge faces connect the upper and lower faces perpendicularly.

The upper face 11 includes a continous chip upsetting face 17 constituting the most peripheral part of the upper face 11. The intersecting lines between the chip upsetting face 17 and the edge faces 13-16 form the main cutting edges 18. A chip forming face 19 is located inside of the chip-upsetting face 17. A border line 20 is separating the chip upsetting face 17 from the chip forming face 19. Except for the corner areas of the cutting insert 10 the chip forming face includes a number of depressions 21 that are spaced apart along the adherent cutting edge 18 and have an extension transverse to the adherent cutting edge 18. Between the depressions 21 in the chip forming face 19 crests 22 are located, said crests 22 bridging the depressions 21 in a direction along the adherent cutting edge 18.

As can be seen from Fig.1 the depressions 21 do not have an extension perpendicular to the cutting edge 18 but forms an angle α with a line perpendicular to the adherent cutting edge 18. The angle α is within the interval 5°-45°, preferably within the interval 10°-20°. A preferred value for the angle α is in the order of 15°.

From Fig.2 it is appearent that the depressions 21, see the enlarged detail, intersect the border line 20 between the chip upsetting face 17 and the chip forming face 19. The distance e in the enlarged detail of Fig.2 is in the interval 0.005-0.1 mm. The depth of the depressions 21 is less than 0.1 mm, preferably within the interval 0.02-0.04.

The chip forming face 19 preferably has a constant radius of curvature R that preferably is less than 3 mm with preference for values in the range of 2 mm. However, within the scope of the invention it is also possible that the chip forming face 19 has a constant radius of curvature over only a portion of its extension transverse to the cutting edge 18. The portion of the chip forming face 19 being closest to the chip upsetting face 17 can be straight. In Fig.2 the tangent T of the chip forming face 19 is drawn trough the intersection point between the chip forming face 19 and the chip upsetting face 17. The angle that the tangent T forms with a line P that is parallel to the lower face 12 is designated by δ. The angle δ is in the interval 10°-40°, preferably within the interval 20°-30° with preference for a value in the range of 25°. If the portion of the chip forming face 19 that is closest to the chip upsetting face 17 is straight then the angle δ is included between a prolongation of the chip forming face 19 and the line P.

In Fig.3 the definition of the chip flowing angle β is shown. Thus said angle β is included between a line L₁ having an extension perpendicular to the cutting edge A and a line L₂ extending in the longitudinal direction of the chip D at its first contact with the cutting insert. Typical values for the angle β is within the interval 5°-15°.

In Fig.4 a detail of a cutting insert of conventional design is shown. From said figure it can be learnt that the cutting edge A consists of the transition between the upper face B and the edge face C. When the chip D is realesed it will slide along the chip forming face that coincides with the upper face B of the cutting insert. By the design of the chip forming face the contact length of the cutting insert is relatively seen long and consequently the heat transfer from the chip to the cutting insert is relatively seen high.

In Fig. 5 it is disclosed the flow of a chip when using a cutting insert according to the present invention. The chip 23 is released from the work piece 24 and slides along the chip upsetting face 17. Simultaneously there is an upsetting of the chip due to the depressions 21 and runners 25 are created on the lower edge of the chip 23, see Fig.6 that shows a transverse section through the chip 23 and the cutting insert 10 at the transition between the chip upsetting face 17 and the chip forming face 19, i.e. the location where runners 25 are created. This deformation work of the chip 23 increases its temperature and thereby the friction between the chip 23 and the cutting insert 10 is decreased. By the curved design of the chip forming face 19 the contact face between the chip 23 and the cutting insert 10 is decreased and the heat transferring from the chip 23 to the cutting insert is decreased. Thus most of the generated heat remains within the chip 23.

A further reduction of the contact area between the chip 23 and the cutting insert 10 is achieved by the arrangement of the depressions in an angle α relative to a line perpendicular to the cutting edge 18 of the cutting insert 10, said angle α being different from the chip flowing angle β. This will cause the runners of the chip to "climb" up towards the crests 22 of the chip forming face 19, said crests 22 being located between the depressions 21 in the chip forming face 19. The result of this "climbing" of the chip 23 is that the surface contact between the chip 23 and the cutting insert becomes a linear contact, see Fig.7. This also creates an increased face pressure in the contact areas and consequently an increased temperature in the chip in a thin surface layer closest to the cutting insert 10, said increased temperature resulting in a further decrease in friction between the chip 23 and the cutting insert 10.

By the relatively seen low heat transfer to the cutting insert problems related to too high temperatures in the cutting edge 18 are avoided, said too high temperatures leading to plastic deformation and/or diffusion wear. This results in a low wear of the cutting edge and consequently longer life even at high temperatures.

The embodiment according to Fig.8 differs from the embodiment described above in the respect that the depressions 21' are curved in top view. The effect of such a curved design is that the "climbing" of the chip is facilitated.

It should also be pointed out that in Fig.8 the upper part of the depressions are bent to the right. Within the scope of the invention it is also possible that the upper portion of the depressions are bent to the left.

The invention is in no way restricted to the embodiments described above. For example the basic shape of the cutting insert can be triangular or rhombic. Also in other respects the invention can be varied freely within the scope of the appending claims.

## Claims

1. A cutting insert for chip forming machining, said cutting insert including at least one cutting edge (18) created by the transition between an upper face (11) and an edge face (13-16) of the cutting insert, said upper face (11) being a rake face and said edge face (13-16) being a clearence face, said rake face (11) including a chip upsetting face (17) adjacent to the cutting edge (18) and a concavely curved chip forming face (19) extending inwardly from the chip upsetting face (17) and forming a border line (20) separating the chip upsetting face (17) and the chip forming face (19), a number of mutually separated along and inside of the cutting edge located depressions (21;21') being arranged to bridge the border line (20) between the chip upsetting face (17) and the chip forming face (19),
**characterized** in that the depressions (21;21') have a longitudinal extension in a direction that forms a certain angle (α) with a line being perpendicular to the adherent cutting edge (18), said angle (α) being in the interval of 5°-45°.

2. Cutting insert according to claim 1,
**characterized** in that the angle (α) is in the interval of 10°-20°

3. Cutting insert according to claim 1 or 2,
**characterized** in that the angle (α) is in the order of 15°.

4. Cutting insert according to any one of the previous claims,
**characterized** in that the angle (α) included between a tangent (T) to the chip forming face (19) or a prolongation of the chip forming face (19) through the intersection between the chip forming face (19) and the chip upsetting face (17) and a line (P) parallel to the lower face (12) is in the interval 10°-40°, preferably in the interval 20°-30° with preference of values in the order of 25°.

5. Cutting insert according to any one of the previous claims,
**characterized** in that the radius of curvature (R) for the chip forming face (19) is less than 3 mm, preferably in the range of 2 mm.

6. Cutting insert according to any one of the previous claims,
**characterized** in that the distance (e) that the depressions (21;21') reach into the chip upsetting face (17) is in the interval 0.005-0.1 mm.

7. Cutting insert according to any one of the previous claims,
**characterized** in that the depth of the depressions (21;21') is less than 0.1 mm, preferably in the interval 0.02-0.04 mm.

## Patentansprüche

1. Schneideinsatz für die spanende Bearbeitung, wobei der Schneideinsatz zumindest eine Schneidkante (18) aufweist, die durch den Übergang zwischen einer oberen Fläche (11) und einer Kantenfläche (13-16) des Schneideinsatzes erzeugt wird, wobei die obere Fläche (11) eine Spanfläche und die Kantenfläche (13-16) eine Freifläche ist, wobei die Spanfläche (11) eine Spanstauchfläche (17) aufweist, die nahe der Schneidkante (18) liegt und eine konkav gekrümmte Spanbildungsfläche (19) aufweist, die sich von der Spanstauchfläche (17) aus nach innen erstreckt und eine Grenzlinie (20) bildet, welche die Spanstauchfläche (17) und die Spanbildungsfläche (19) voneinander trennt, mit einer Anzahl von zueinander beabstandeten und innerhalb der Schneidkante angeordneten Einsenkungen (21; 21'), die so angeordnet sind, daß sie die Grenzlinie (20) zwischen der Spanstauchfläche (17) und der Spanbildungsfläche (19) überbrücken,
dadurch gekennzeichnet, daß die Einsenkungen (21; 21') eine Längserstreckung in einer Richtung haben, die einen bestimmten Winkel (α) mit einer Linie hat, welche sich senkrecht zu der benachbarten Schneidkante (18) erstreckt, wobei der Winkel (α) in dem Bereich von 5°-45° liegt.

2. Schneideinsatz nach Anspruch 1, dadurch gekennzeichnet, daß der Winkel (α) im Bereich von 10°-20° liegt.

3. Schneideinsatz nach Anspruch 1 oder 2, dadurch gekennzeichnet, daß der Winkel (α) in der Größenordnung von 15° liegt.

4. Schneideinsatz nach einem der vorstehenden Ansprüche, dadurch gekennzeichnet, daß der Winkel (α), der zwischen einer Tangente (T) der Spanbildungsfläche (19) oder einer Verlängerung der Spanbildungsfläche (19) durch den Schnitt zwischen der Spanbildungsfläche (19) und der Spanstauchfläche (17) und einer Linie (P) parallel zu der unteren Fläche (12) eingeschlossen wird, in dem Bereich von 10°-40°, vorzugsweise im Bereich von 20°-30° mit besonders bevorzugten Werten in der Größenordnung von 25° liegt.

5. Schneideinsatz nach einem der vorstehenden Ansprüche, dadurch gekennzeichnet, daß der Krümmungsradius der Spanbildungsfläche (19) kleiner ist als 3 mm und vorzugsweise im Bereich von 2 mm liegt.

6. Schneideinsatz nach einem der vorstehenden Ansprüche, dadurch gekennzeichnet, daß der Betrag (e), um welchen die Einsenkungen (21; 21') in die Spanstauchfläche (17) hineinreichen, im Bereich von 0,005-0,1 mm liegt.

7. Schneideinsatz nach einem der vorstehenden Ansprüche, dadurch gekennzeichnet, daß die Tiefe der Einsenkungen (21; 21') weniger als 0,1 mm beträgt und vorzugsweise in dem Bereich von 0,02-0,04 mm liegt.

## Revendications

1. Une plaquette de coupe pour usinage par formation de copeaux, ladite plaquette de coupe comprenant, au moins, une arête de coupe (18) formée par la transition entre une face supérieure (11) et une face latérale (13 à 16) de la plaquette de coupe, ladite face supérieure (11) étant une face formant taillant et ladite face latérale (13 à 16) étant une face de dégagement, ladite face formant taillant (11) comprenant une face de refoulement de copeau (17) adjacente à l'arête de coupe (18) et une face de formation de copeau incurvée, concave, (19) se prolongeant vers l'intérieur à partir de la face de refoulement de copeau (17) et formant une ligne de transition (20) séparant la face de refoulement de copeau (17) et la face de formation de copeau (19), une pluralité de cavités (21; 21') séparées entre elles le long et à l'intérieur de l'arête de coupe étant agencées pour chevaucher la ligne de transition (20) entre la face de refoulement de copeau (17) et la face de formation de copeau (19),
caractérisée en ce que les cavités (21; 21') ont une extension longitudinale dans une direction de manière à former un certain angle ( α ) avec une ligne perpendiculaire à l'arête de coupe adjacente (18), ledit angle ( α ) étant compris dans la gamme de 5° à 45°.

2. Plaquette de coupe selon la revendication 1, caractérisée en ce que l'angle ( α ) est dans la gamme de 10° à 20°.

3. Plaquette de coupe selon la revendication 1 ou 2, caractérisée en ce que l'angle ( α ) est de l'ordre de 15°.

4. Plaquette de coupe selon l'une quelconque des précédentes revendications, caractérisée en ce que l'angle ( α ) inclus entre la tangente (T) de la face de formation de copeau (19) ou un prolongement de la face de formation de copeau (19) passant par l'intersection entre la face de formation de copeau (19) et la face de refoulement de copeau (17) et une ligne (P) parallèle à la face inférieure (12) est dans la gamme de 10° à 40°, de préférence, la gamme de 20° à 30°, de préférence d'une valeur de l'ordre de 25°.

5. Plaquette de coupe selon l'une quelconque des précédentes revendications, caractérisée en ce que le rayon de courbure (R) de la face de formation de copeau (19) est inférieur à 3 mm, de préférence, dans la gamme de 2 mm.

6. Plaquette de coupe selon l'une quelconque des précédentes revendications, caractérisée en ce que la distance (e) atteinte par les cavités (21; 21') dans la face de refoulement de copeau (17) est dans la gamme de 0,005 à 0,1 mm.

7. Plaquette de coupe selon l'une quelconque des précédentes revendications, caractérisée en ce que la profondeur des cativés (21; 21') est inférieure à 0,1 mm, de préférence dans la gamme de 0,02 à 0,04 mm.
